# EUROPEAN PATENT APPLICATION

(11) **EP 4 412 223 A2**
(43) Date of publication of application: **07.08.2024**
(21) Application number: 24183255.9
(22) Date of filing: 20.01.2017
(51) Int. Cl.: H04N 21/2343

(54) **METHOD AND APPARATUS FOR TRANSMITTING AND RECEIVING BROADCAST SIGNAL**

(30) Priority: 22.01.2016 US 201662281744 P; 29.01.2016 US 201662288454 P; 17.02.2016 US 201662296089 P
(62) Divisional of application: 17741703.7
(71) Applicant: LG Electronics Inc., Yeongdeungpo-gu Seoul 07336 (KR)
(72) Inventor: HWANG, Soojin, 06772 Seoul (KR); Jongyeul, SUH, 06772 Seoul (KR); Sejin, OH, 06772 Seoul (KR)
(74) Representative: Frenkel, Matthias Alexander

(57) **Abstract**

The present invention relates to an apparatus and a method for transmitting and receiving a broadcast signal including a subtitle service. An apparatus for receiving a broadcast signal according to one embodiment of the present invention comprises: a tuner for receiving a broadcast signal which comprises a video stream and a subtitle stream and further comprises information capable of downloading font data related to subtitle data included in the subtitle stream and an indicator for indicating whether the font data are essential; a demultiplexer for demultiplexing the broadcast signal received into the video stream and the subtitle stream; a decoder for decoding each of the video stream and the subtitle stream; a network processor for downloading the font data on the basis of the information capable of downloading the font data; and a display processor for displaying the subtitle stream by using the font data.

## Description

### [Technical Field]

The present invention relates to an apparatus and method for transmitting and receiving a broadcast signal.

### [Background Art]

With the development of digital technology and communication technology, audio/video-based multimedia content has been increasingly distributed and requested in various fields, such as the Internet and personal media, as well as broadcasts and movies. In addition, consumers' demand for realistic media that provide a stereoscopic effect through broadcasts and movies has increased. Furthermore, as the size of TVs in homes is increased together with the development of display technology, consumers' demand for realistic content at a high quality of a High-Definition (HD) or higher level is increasing. Realistic broadcasts through an Ultra High Definition TV (UHDTV) and a 3DTV have attracted considerable attention as a next-generation broadcast service. In particular, an Ultra High Definition (UHD) broadcast service has been increasingly discussed.

Currently, a broadcast subtitle service has been provided in the form of a closed caption or a digital video broadcasting (DVB) subtitle. Among these, in the case of DVB subtitling, a subtitle is provided in the form of a bitmap image, and therefore it is necessary to provide subtitles with different sizes for images with various sizes or to scale a single type of subtitle. In the former case, efficiency may be lowered in terms of bandwidth usage, and in the latter case, sharpness may be lowered due to scaling. In particular, in recent days, in which a high-resolution broadcast service via a UHDTV has been actively discussed, there is a need for a new broadcast subtitle service in order to overcome this problem.

### [Disclosure]

### [Technical Problem]

It is an object of the present invention to improve transmission efficiency in a method and apparatus for transmitting a broadcast signal.

It is another object of the present invention to provide a transmission apparatus and method capable of providing a subtitle service through a broadcast network.

It is a further object of the present invention to provide an apparatus and method capable of a timed text subtitle service based on an extensible markup language (XML).

### [Technical Solution]

A broadcast signal transmission apparatus according to an embodiment of the present invention includes an encoder for encoding video data to generate a video stream, a multiplexer for generating a broadcast signal including the generated video stream and a subtitle stream, the broadcast signal further including information enabling downloading of font data associated with subtitle data contained in the subtitle stream and an indicator indicating whether the font data are essential, and a transmitter for transmitting the generated broadcast signal.

The information enabling downloading of the font data and the indicator indicating whether the font data are essential may be transmitted in the state of being contained in program-specific information (PSI) or service information.

The information enabling downloading of the font data may be uniform/universal resource identifier (URI) information including a transaction identifier (transaction ID).

The subtitle stream may further include information about a safe area for preventing the subtitle data from being cropped according to the aspect ratio of a receiver when the subtitle data are displayed.

A broadcast signal reception apparatus according to an embodiment of the present invention includes a tuner for receiving a broadcast signal, the broadcast signal including a video stream and a subtitle stream, the broadcast signal further including information enabling downloading of font data associated with subtitle data contained in the subtitle stream and an indicator indicating whether the font data are essential, a demultiplexer for demultiplexing the received broadcast signal into the video stream and the subtitle stream, a decoder for decoding the video stream and the subtitle stream, a network processor for downloading the font data based on the information enabling downloading of the font data, and a display processor for displaying the subtitle stream using the font data.

The information enabling downloading of the font data and the indicator indicating whether the font data are essential may be transmitted in the state of being contained in program-specific information (PSI) or service information.

The information enabling downloading of the font data may be uniform/universal resource identifier (URI) information comprising a transaction identifier (transaction ID).

The subtitle stream may further include information about a safe area for preventing the subtitle data from being cropped according to the aspect ratio of a receiver when the subtitle data are displayed.

### [Advantageous Effects]

According to an embodiment of the present invention, it is possible to improve the transmission efficiency of a broadcasting system.

According to an embodiment of the present invention, it is possible to provide a subtitle service through a broadcast network.

According to an embodiment of the present invention, it is possible for a broadcast reception apparatus and method to extract a subtitle from a broadcast signal and to display the extracted subtitle.

### [Description of Drawings]

FIG. 1 is a view showing an XML-based broadcast subtitle service according to an embodiment of the present invention;
FIG. 2 shows a data field included in a PES packet according to an embodiment of the present invention;
FIG. 3 shows a font segment according to an embodiment of the present invention;
FIG. 4 shows an extended font segment according to an embodiment of the present invention;
FIG. 5 shows a font segment according to another embodiment of the present invention;
FIG. 6 shows font segment information for DSMCC according to an embodiment of the present invention;
FIG. 7 shows a further extended font segment according to an embodiment of the present invention;
FIG. 8 shows a method of designating a safe area for subtitle data according to an embodiment of the present invention;
FIG. 9 shows a data field of a PES packet including safe area information according to an embodiment of the present invention;
FIG. 10 shows a method of transmitting font information as signaling information according to an embodiment of the present invention;
FIG. 11 shows a method of transmitting safe area information as signaling information according to an embodiment of the present invention;
FIG. 12 shows a method of receiving font data using font information received through an EIT according to an embodiment of the present invention;
FIG. 13 shows a method of receiving font data using font information received through an EIT according to another embodiment of the present invention;
FIG. 14 shows a method of receiving font data using font information received through an EΓΓ according to another embodiment of the present invention;
FIG. 15 shows a method of receiving font data using font information received through an EIT according to another embodiment of the present invention;
FIG. 16 is a view showing data information indication according to an embodiment of the present invention;
FIG. 17 is a view showing group information indication (groupInfoIndication) according to an embodiment of the present invention;
FIG. 18 is a view showing a font download method using a PMT of a broadcast receiver according to an embodiment of the present invention;
FIG. 19 is a view showing the detailed configuration of a broadcast receiver according to an embodiment of the present invention;
FIG. 20 is a block diagram showing a broadcast transmitter according to an embodiment of the present invention;
FIG. 21 is a block diagram showing a broadcast receiver according to an embodiment of the present invention;
FIG. 22 is a view showing a method of transmitting a broadcast signal including an XML subtitle according to an embodiment of the present invention; and
FIG. 23 is a view showing a method of receiving a broadcast signal including an XML subtitle according to an embodiment of the present invention.

### [Best Mode]

As a broadcast service through an Internet protocol (IP) has begun to be provided as a next-generation broadcast service, a new subtitle service standard has been established to replace a typical broadcast subtitle. In future, a broadcast service in the form of a fusion of existing broadcast service and IP is expected, and in this case, it is not effective to separately serve subtitles formed with different standards.

Examples of the IP broadcast subtitle service standard may include a time text markup language (TTML), Society of Motion Picture and Television Engineers Timed Text (SMPTE-TT), and European Broadcasting Union time text (EBU-TT-D), which have been established based on XML. These may be appropriate for Dynamic Adaptive Streaming over HTTP (DASH)-based services that need to support various resolutions in that a subtitle independent of the size of an image can be served. There has been an attempt to use an XML subtitle in a UHD broadcast service using this advantage, and therefore there is a need for a method of transmitting an XML subtitle established to be appropriate for media and IP streaming according to an existing broadcast service.

Recently, standards of XML language-based subtitles such as time text markup language (TTML) and EBU time text (EBU-TT) have been established. The standards are used for a subtitle service in media and IP streaming environments but the standards groups, such as DVB and ATSC, also require that the standards be capable of being used in a broadcast service. There are requirements set with the goal of taking advantage of adaptive use of standards in various service environments (e.g., HD and UHD) based on the same subtitle source as well as use of an integrated subtitle source in various broadcast environments.

For easy understanding of the present invention and the convenience of description, terms and abbreviations are defined as follows.

Extensible Markup Language (XML) is an improved version of HTML. A homepage construction function, a retrieval function, etc. are further improved, and complicated data processing of a client system can be easily performed. In the present invention, XML is used as the language constituting subtitle data, and an XML subtitle may include a head and a body.

An Elementary Stream (ES) may mean the output of a data encoder. That is, the output of a video encoder and the output of an audio encoder may be defined as a video ES and an audio ES, respectively. In the present invention, an XML subtitle ES may be defined and used.

A Packetized Elementary Stream (PES) is an ES that is packetized and may mean a stream of packets having headers.

A Transport Stream (TS) is a stream for transport including one or several programs in an MPEG-2 system, and may be used for a transport medium having a transport error. In the present invention, the TS may mean a transport stream in which at least two of a video ES, an audio ES, or a subtitle ES are multiplexed and transmitted.

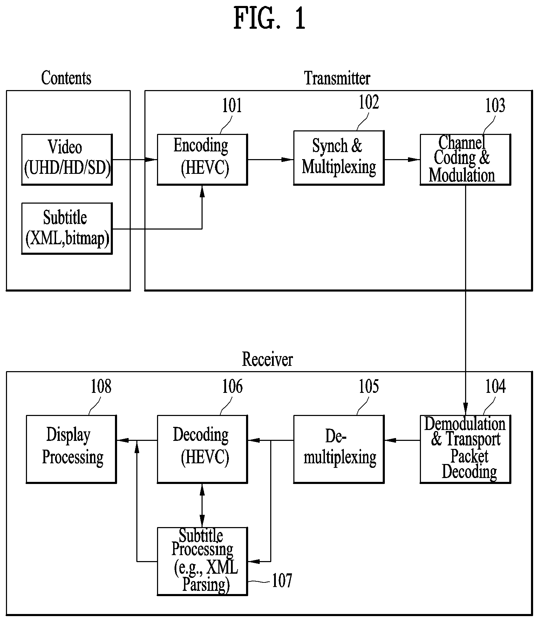

FIG. 1 shows an XML-based broadcast subtitle service according to an embodiment of the present invention. FIG. 1 is a diagram showing a transmission end, a reception end, and an end-to-end system for a digital broadcast service. An XML-based broadcast subtitle used in the present invention is applicable to UHD/HD/SD, since the XML-based broadcast subtitle is not affected by the size of an image.

The transmission end transmits a compressed image and an XML subtitle modified for transmission via a multiplexer. At this time, presentation time stamp (PTS) information is used for synchronization between two pieces of data. In FIG. 1, the transmission end may receive video data and subtitle information. The resolution of the video data input to the transmission end may be UHD, HD, or SD. In addition, the subtitle information input to the transmission end may be written using XML or bitmap. The video data input to the transmission end may be encoded (101) by the transmission end. The transmission end may use High Efficiency Video Coding (HEVC) as a scheme for encoding video data. The transmission end may synchronize and multiplex the encoded video data and the XML subtitle (102). Here, the XML subtitle may be modified for transmission. That is, the XML subtitle may be modified into an XML subtitle ES and an XML subtitle PES for transmission. The video data and XML subtitle encoded as described above may be synchronized using PTS information. The transmission end may channel-code and modulate the synchronized and multiplexed data (103), and may transmit the data as a broadcast signal.

The reception end provides a subtitle after demultiplexing, video decoding, and XML parsing. At this time, the reception end performs synchronization between the video data and the subtitle based on a PTS. The reception end may demodulate a received broadcast signal and perform transport packet decoding (104). The decoded transport packet is demultiplexed (105), and is then input to a video decoder 106 and a subtitle processor (e.g. an XML parser) 107. Here, the video decoder 106 may decode UHD, HD, or SD video data depending on the resolution of the received video data. The video decoder 106 may use High Efficiency Video Coding (HEVC) as a scheme for decoding video data. In addition, the subtitle processor 107 may extract an XML subtitle. During this process, the reception end may synchronize the video data and the XML subtitle based on a PTS. The decoded video data and XML subtitle may be processed and displayed by a display processor 108.

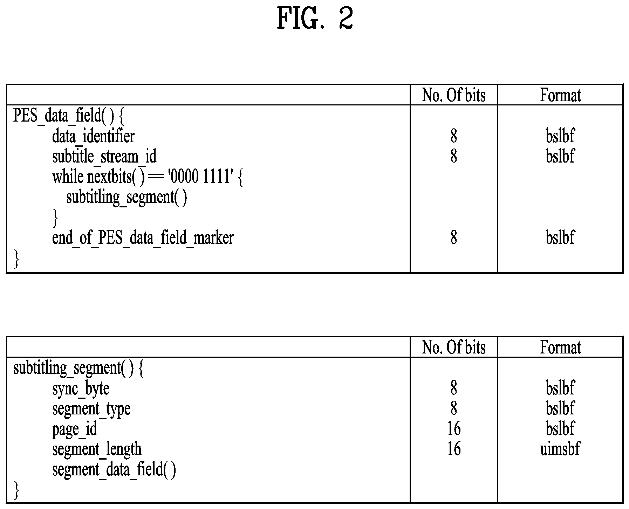

FIG. 2 shows a data field included in a PES packet according to an embodiment of the present invention. A PES packet that transmits a subtitle stream according to the present invention may include a PES data field (PES_data_field()) in PES_packet data byte. PES_data_field () may include a data identifier (data_identifier), a subtitle stream identifier (subtitle_stream_id), and a subtitle segment (subtitling_segment()). In addition, the subtitle segment (subtitling_segment()) may include a synchronization byte (sync_byte), segment type information (segment_type), a page identifier (page_id), segment length information (segment_length), and a segment data field (segment_data_field()). data_identifier may identify that a stream included in the PES packet is a subtitle stream. Subtitle_stream_id may identify different subtitle streams. This may indicate whether a subtitle stream is an existing bitmap-based subtitle stream or a timed text-based subtitle stream. segment_type, which is information included in the subtitle segment (subtitling_segment()), may indicate the kind of segment included in the following segment_data_field(). For example, in the case in which segment_type has a value of 0x20, this may indicate that the segment is a timed text (e.g. EBU-TT-D, TTML, or IMSC1)-based subtitle segment. In the case in which segment_type has a value of 0x21, this may indicate that the segment is a segment including font data used in timed text. In the case in which segment_type has a value of 0x22, this may indicate that the segment is a segment including a safe area used in timed text. page_id may indicate an identifier for the group of segments related to a subtitle. That is, this may indicate that segments having the same page_id are segments used to configure the same subtitle. For example, in the case in which a Korean subtitle and an English subtitle are present, subtitle data corresponding to the Korean subtitle and subtitle data corresponding to the English subtitle may be distinguished using different page_ids. That is, data included in a single service may be designated using page_id. segment_length may indicate the length of segment data included in the following segment_data_field(). segment_data_field() may include substantial segment data.

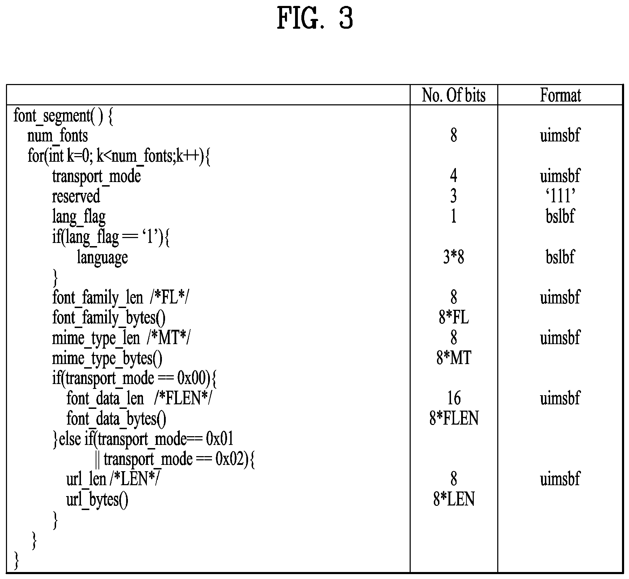

FIG. 3 shows a font segment according to an embodiment of the present invention. In this embodiment, the above segment_type indicates a segment including a font related to a timed text-based subtitle or download data of the font. For example, in the case in which segment_type has a value of 0x21, the above segment_data_field() may include the shown font_segment(). font_segment() may include at least one of font number information (num_fonts), language flag information (lang_flag), language information (language), font family length information (font_family_len), font family information (font family_bytes()), mime type length information (mime_type_len), mime type information (mime_type_bytes()), transport mode information (transport_mode), font data length information (font_data_len), font data information (font_data_bytes()), URL length information (url_len), or URL information (url_bytes()). num_fonts may indicate the number of fonts related to a subtitle. lang_flag may indicate whether there exists language information of the font as described below. The language may indicate language information of the font, which may be indicated in the form defined by ISO 639-2 or ISO 639-2/T. font_family_len may indicate the length of the following font family_bytes. font_family_bytes() may include the family of the font. That is, font_family_bytes() may include "default", "monospace", "sansSerif", "serif", "monospaceSansSerif", "monospaceSerif", °proportionalSansSerif", and °proportionalSerif". mime_type_len may indicate the length of the following mime_type_bytes(). mime_type_bytes() may include mime type related to the font. For example, in the case in which mime_type bytes() is Open Font Format, this may indicate application/font-sfnt, etc. In addition, mime_type_bytes() may include the name of the font, such as "arial". transport_mode may indicate a font data transport mode. For example, in the case in which transport_mode has a value of 0x00, this may indicate that the font is transmitted while including font data. In the case in which transport_mode has a value of 0x01, this may indicate that font data are transmitted through a data carousel within a broadcast network. In the case in which transport_mode has a value of 0x02, this may indicate that font data can be downloaded over the Internet. font_data_len may indicate the length of the font_data_bytes(). font_data_bytes() may include font data. url_len may indicate the length of the following url_bytes(). url_bytes() may indicate a path through which the font data can be downloaded. For example, in the case in which transport_mode has a value of 0x01, url_bytes() may include a path through which font data can be received through a data carousel (DSM-CC, etc.) within a broadcast network, an object that transmits the font, or information for identifying the data carousel. In the case in which transport_mode has a value of 0x02, url_bytes() may indicate an Internet URL from which the font data can be downloaded. Here, the URL may be indicated in the form of a uri or urn. That is, transport_mode may indicate a uniform/universal resource identifier (URI), which is the higher concept of the URL, instead of the URL. In this specification, a description of the URL may be interpreted as the description of the URI.

The above url_bytes() may be configured as follows. When transport_mode is transmitted in the form of a data/object carousel, which is a broadcast form, the URL may include at least one of an original network id, a transport stream id, a service id (which may include event id), a component tag, and a transaction id (=dvb carousel_id), as defined in the following format.
format: dvb://<original_network>. [<transport_stream>]. <service_id>. <compo-nent_tag>{&<component_tag>} [$<dvb carousel_id>]<path-absolute>

For example, when font information is transmitted in the form of data/object carousel, this may be expressed as follows. dvb://233a.1041.10bf.1e$3f0ab47c/font/serif/timesNewRoman.ttf

In addition, path-absolute may include information, such as a language, font family, and mime type, whereby it is possible to signal which font is indicated by the url. This may indicate that the font is for component 1e of service 10bf transmitted through TS 1041 within the original network 233a. 3f0ab47c, described after "$", may indicate a transaction identifier (transaction_id) in the data carousel for the service. Here, transaction_id may be used to have the same meaning as dvb carousel_id. Whether a path component exists may be changed depending on whether data or the object carousel is referenced. The reason for this is that, for the data carousel, the transaction id may identify a data module (file) in the carousel. In addition, the /font/serif/timesNewRoman.ttf may indicate the absolute path of the object carousel and the file name. This may include a font family and a mime type (font name, etc.) of the font information.
goup_id and module_id may be further included depending on carousel_type_id (one layer carousel, two layer carousel,...). Depending on the circumstances, font-related information may be further included. The format thereof is as follow.
format: dvb://<original_network>. [<transport_stream>]. <service_id>. <compo-nent_tag>{&<component_tag>}[$<dvb_carousel_id>.<carousel_type_id>[.<group_id>[.<module_id>{&<mod-ule_id>}]]]<path-absolute>
format: dvb://<original_network>. [<transport_stream>]. <service_id>. <compo-nent_tag>{&<component_tag>}[$<dvb_carousel_id>. ,,, .<essential_indicator>.<language>.<font_fam-ily>. < mime_type>] <path-absolute>

A description of the syntax included in the above dvb uri is identical to a description of a field included in font_segment_for_DSMCC(), a description of which will follow.

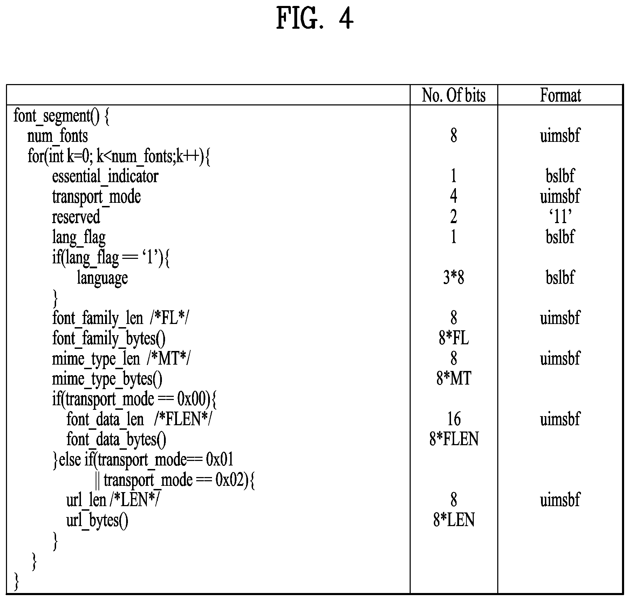

FIG. 4 shows an extended font segment according to an embodiment of the present invention. The above font segment may further include an essential indicator (essential_indicator), in addition to the above-mentioned information. The essential_indicator may indicate whether a font described in the font segment must be essentially used in timed text. For example, in the case in which the essential_indicator has a value of 1, this may indicate that the font must essentially be used in timed text. In this case, the receiver may download and use the font data according to the transport_mode. A description of fields other than essential_indicator is the same as the above description.

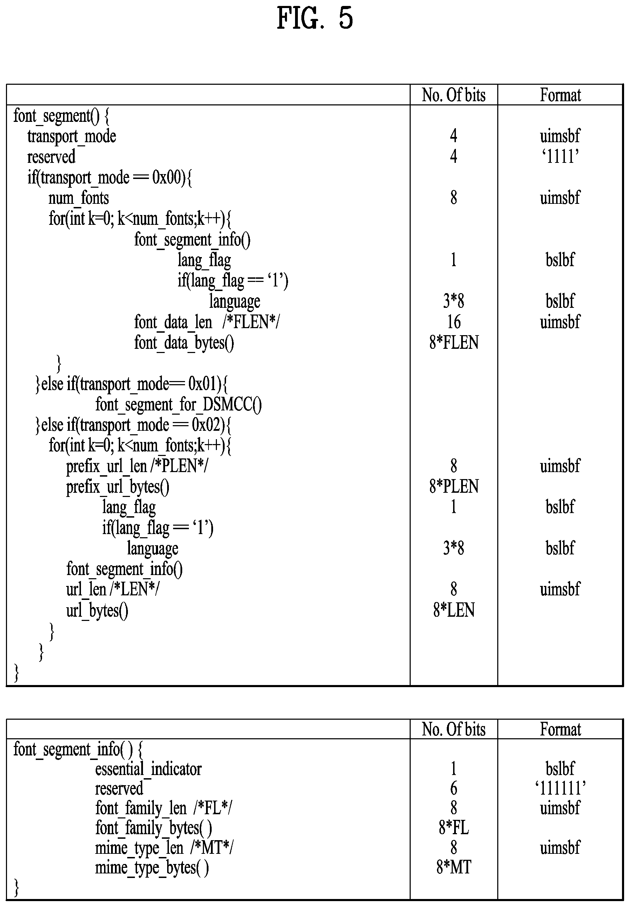

FIG. 5 shows a font segment according to another embodiment of the present invention. In this embodiment, the above segment_type indicates a segment including a font related to a timed text-based subtitle or download data of the font. For example, in the case in which segment_type has a value of 0x21, the above segment_data_field() may include the shown font_segment(). The shown font_segment structure may describe at least one font that is transmitted according to the transport mode, unlike the case in which transport modes are distinguished for an individual font, as previously described. font_segment() may describe information about a font transmitted for each transport mode. For example, in the case in which the transport mode has a value of 0x00, which means that font data are transmitted in the state of being included in the segment, font_segment() may include font number information and font segment_info(), lang_flag, language, font data_len, and font_data_bytes() for each font. A description of each field is identical to the above description, and font_segment_info() is shown in the lower end of the figure. That is, font_segment_info() may include essential_indicator, font family_len, font family_bytes(), mime_type_len, and mime_type_bytes(). In the case in which the transport mode has a value of 0x01, the font data may be transmitted through the data carousel within the broadcast network. In this case, font_segment() may include font_segment_for_DSMCC(), which will be described in detail with reference to the next figure. In the case in which the transport mode has a value of 0x02, the font data may be downloaded over the Internet. In this case, font_segment() may include common URL length information (prefix_url_len), common URL information (prefix_url_bytes()), lang_flag, language, font_segment_info(), url_len, and url_bytes() for each font. Here, prefix url_len may indicate the length of a url capable of indicating a common url address for each font. In addition, prefix_url_bytes() may indicate a common url address for each font. The address for each font may be indicated using the url_bytes().

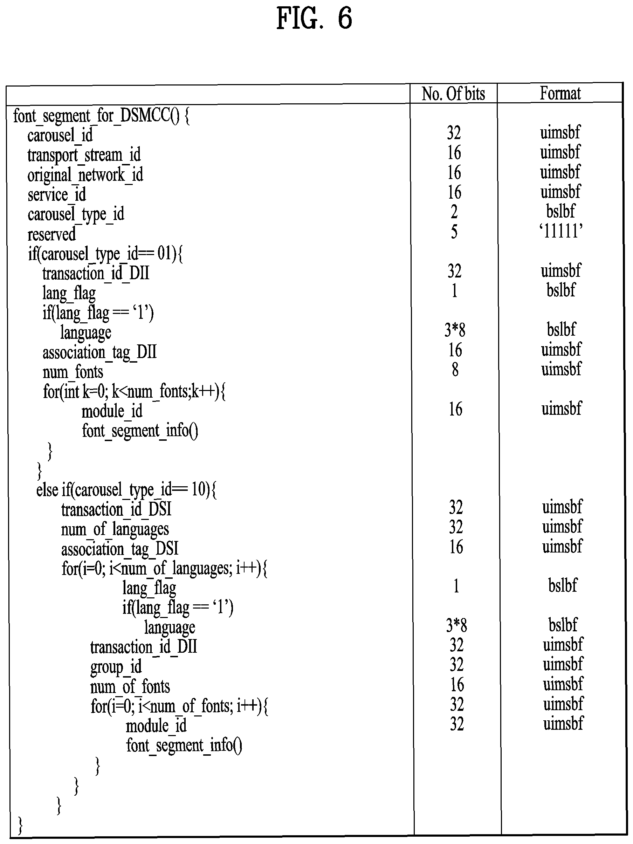

FIG. 6 shows font segment information for DSMCC according to an embodiment of the present invention. In the case in which transport_mode is set to have a value of 0x01 and thus font data are transmitted through DSM-CC, as previously described, the above segment_data_field() may include the following font_segment for_DSMCC(). In the case in which carousel_type id has a value of 01, font_segment_for_DSMCC() may include only module_id. In the case in which carousel_type_id has a value of 10, font_segment_for_DSMCC() may include group_id and module_id. This may be changed depending on units including font data. In some embodiments, font_segment_for_DSMCC() may be further extended to additionally include block_id, which is capable of indicating one block in the module. For example, in the case in which one font is included for each module_id, font_segment_info() may be included for each module. That is, font_segment_for_DSMCC() may have mime_type_bytes() for each font. If one font is included in one group, font_segment_info() may be provided together with transaction_id_DII. That is, font segment_info() must be included for each font.

If carousel_type_id has a value of 10, meaning that one super group exists, each group is a font, and the super group includes font information of different languages, one font segment_info() may be included for one font in the same manner as the case in which carousel_type_id has a value of 01.

In the case in which carousel_type_id has a value of 10, and therefore one super group exists, and the entire super group is downloaded, the transaction ID may include only transaction_id without being identified as either DSI or DII. In the same manner, in the case in which carousel_type id has a value of 01, and therefore one group exists, and the entire group must be downloaded, transaction ID may be signaled as only one transaction_id without being distinguished according to the carousel_type_id.

Information included in the font_segment_for_DSMCC() is as follows. Carousel_id may indicate an identifier for identifying a carousel within a specific network. Transport_stream_id, original_network_id, and service_id (the same as program_number in a PMT) may indicate transport_stream_id, original_network_id, and service_id, which are basic information about the font that is transmitted through DSM-CC. Carousel_type_id may indicate an identifier for identifying the kind of a data carousel. For example, in the case in which carousel_type_id have a value of 01, this indicates a one-layer carousel. In the case in which the carousel_type_id have a value of 10, this indicates a two-layer carousel. transaction_id_DSI and transaction_id DII may have the same value as transaction_id of a top-level DownloadServerInitiate message or DownloadInfoIndication message. In some embodiments, transaction_id_DSI and transaction_id_DII may be indicated as transaction_id without being distinguished. Depending on the circumstances, however, the transaction_id may be changed to download_id. transaction_id may be different from download_id as follows. transaction_id connects a pair of request-response operations of a message, whereas download_id is connected to the entire set of data messages. downloadId is an identifier for a download scenario in the progress. downloadId may be uniquely defined in a connection for flow-controlled and non-flow-controlled scenarios within a network for the data carousel. downloadId may be used in successive DownloadDataBlock, Download Data Request, and DownloadCancel messages used by the download scenario. (The downloadId field is the identifier of the download scenario in progress. downloadId shall be uniquely defined within the Network for data carousel scenario and unique within the connection for flow-controlled and non-flow-controlled scenarios. This identifier shall be used in all of the subsequent DownloadDataBlock, Download Data Request, and DownloadCancel messages used by the download scenario in progress.)

On the assumption that one module includes one font, num_of_fonts may have the same value as num_of_modules. association_tag_DII and association_tag_DSI may include association_tag, which is associated with a stream that is not part of the data broadcast service or another DVB service. (This 16-bit field contains association_tag, which is associated either with a stream that is not part of this data broadcast service or with another DVB service.) association tag_DII and association_tag_DSI may be included in association_tag without being distinguished. This may indicate the tag of a stream including several fonts or several languages that are transmitted through one transaction_id. module_id may identify the module in which the object is conveyed within the carousel. (module_id identifies the module in which the object is conveyed within the carousel.) Font_segmentjnfo() may indicate a mime type, such as font name. Group_id may be set to be the same as transaction_id of DownloadInfoIndication, which describes a group. This is a 32-bit field which shall be equal to transaction_id of the DownloadInfoIndication message that describes the group.) That is, group_id may have the same value as transaction_id_DII. In the previous embodiment, signaling is included on the basis of the object carousel. In some embodiments, some of the above fields may be added or removed depending on whether data_broadcast_id is an object carousel or a data carousel.

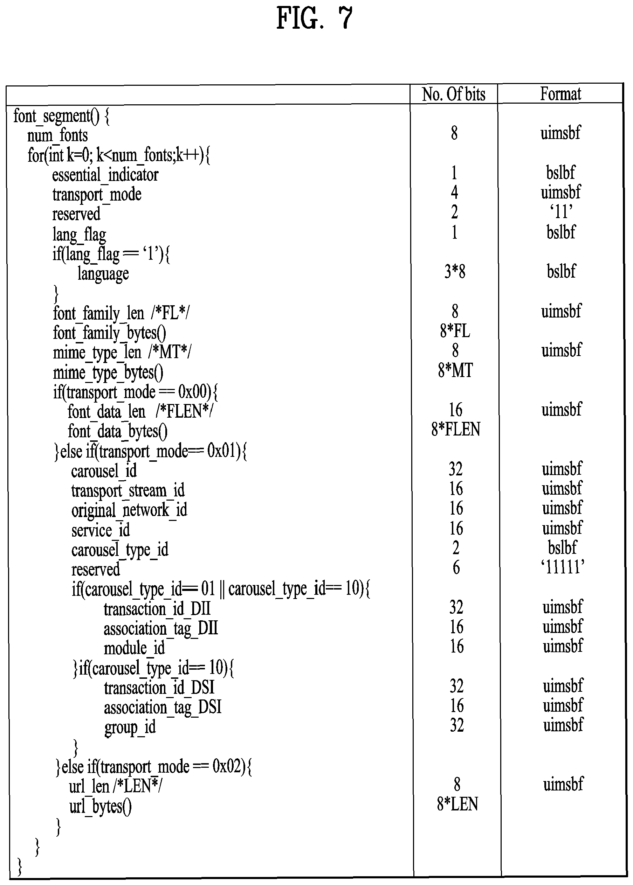

FIG. 7 shows a further extended font segment according to an embodiment of the present invention. The above font segment may further include information related to the data carousel, in addition to the above-mentioned information. The syntax structure of the shown font segment is advantageous when the receiver downloads a desired font. A description of each field is identical to the above description. The shown font_segment() embodiment includes a transport mode for each font and necessary information based on the transport mode. The shown font_segment() may include mime_type including an essential indicator, a font family, and a name indicating whether each font is a font that must be essentially downloaded irrespective of the transport mode, In addition, font_segment() may include additional information about transport_mode for each font. In the case in which carousel_type_id has a value of 01, font_segment() may include only module_id. In the case in which carousel_type_id has a value of 10, font_segment() may include group_id and module_id. This may be changed depending on units including font data. Depending on the circumstances, font_segment may be further extended to additionally include block_id that is capable of indicating one block in the module. As previously described, url_len, which is one piece of information included in font_segment(), may indicate the length of url_bytes(), and the url_bytes() may indicate a path through which the font data can be downloaded. For example, in the case in which transport_mode has a value of 0x02, url_bytes() may indicate an Internet URL from which the font data can be downloaded.

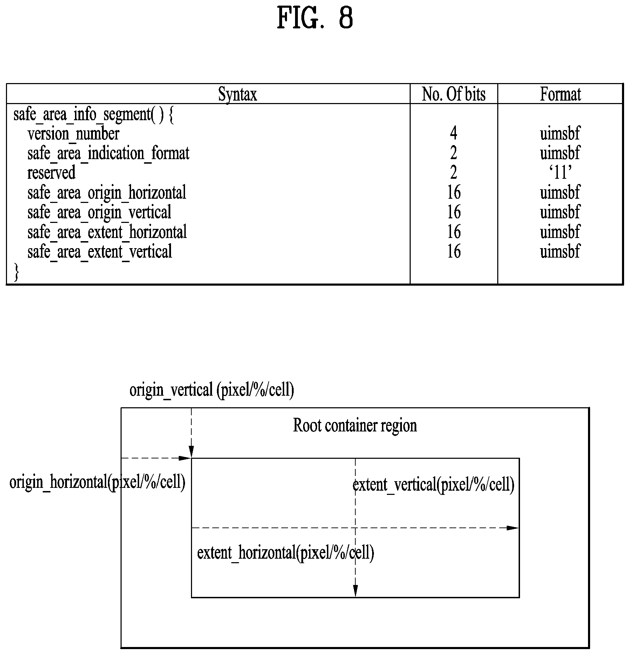

FIG. 8 shows a method of designating a safe area for subtitle data according to an embodiment of the present invention. A broadcasting system according to the present invention may transmit safe area information, which is information for displaying a subtitle without being cropped. The safe area information may set an area for preventing a subtitle data display area from being cropped according to the aspect ratio of the display of the receiver. The safe area information may be transmitted while being included in PSI, SI, or a PES. In the following, an embodiment in which the safe area information is transmitted while being included in a PES will be described. In some embodiments, the safe area information may be included in subtitle data included in the PES. In the case in which the above segment_type is a segment indicating a safe area for a timed text-based subtitle (for example, in the case in which segment_type has a value of 0x22), the above segment_data_field() may include the shown safe_area_info_segment().

safe_area_info_segment() may include at least one of version_number information (version_number), safe area indication format information (safe_area_format), safe area horizontal origin information (safe_area_origin_horizontal), safe area vertical origin information (safe_area_origin_vertical), safe area horizontal region information (safe_area_extent_horizontal), or safe area vertical region information (safe_area_origin_vertical). version_number may indicate the version of the safe area information. In the case in which a change to new information is performed, version number may be increased in ascending powers. safe_area_format indicates the type of a value indicating the safe area. The value indicating the safe area may be a pixel, or may be expressed as a rate or percentage indicating a portion of a root container region. Alternatively, the value may be the value of a cell obtained by segmenting the root container region into predetermined sections. safe_area_origin_horizontal indicates an x value (horizontal) of an origin (x,y) from which the safe area starts in the root container region. The meaning of safe_area_origin_horizontal may be interpreted as a pixel, %, or segment according to safe_area_format. safe_area_origin_vertical indicates a y value (vertical) of the origin (x,y) from which the safe area starts in the root container region. In the same manner, the meaning of safe_area_origin_vertical may be interpreted as a pixel, %, or segment according to safe_area_format. safe_area_extent_horizontal indicates the area of a horizontal axis that starts from the origin (x), from which the safe area starts in the root container region. In the same manner, the meaning of the safe_area_extent_horizontal may be interpreted as a pixel, %, or segment according to safe_area_format. The safe_area_origin_vertical indicates the area of a vertical axis that starts from the origin (y), from which the safe area starts in the root container region. In the same manner, the meaning of the safe_area_origin_vertical may be interpreted as pixel, %, or segment according to the safe_area_format. The above safe area may be designated by the coordinates of the origin of the area and the area (the length) of the horizontal and vertical axis thereof, and may indicate an inherent area that is not cropped according to the aspect ratio of the display of the receiver.

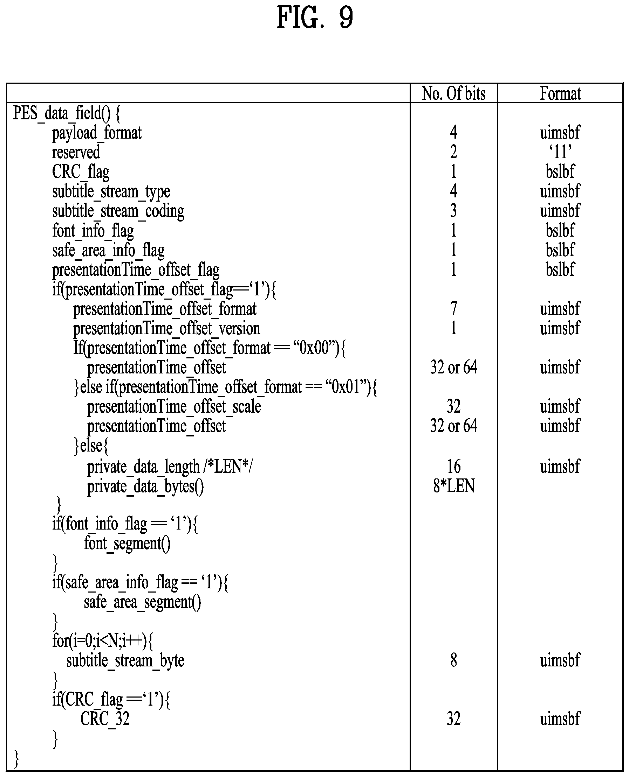

FIG. 9 shows a data field of a PES packet including safe area information according to an embodiment of the present invention. As shown, the data field of the PES packet may include a safe area information flag (safe area_info flag) and a safe area segment (safe_area_segment()). safe area_info flag may indicate whether safe area information designating a safe area for displaying a subtitle without being cropped irrespective of the aspect ratio of the receiver is included. safe_area_segment() may include information designating a safe area for displaying a subtitle while preventing the subtitle from being cropped according to the aspect ratio of the receiver. The receiver may display subtitle data in consideration both of the subtitle data included in the PES packet and of the safe area information.

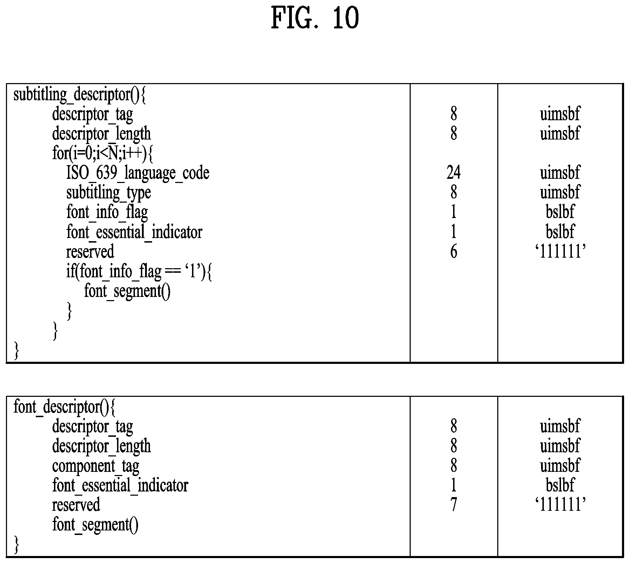

FIG. 10 shows a method of transmitting font information as signaling information according to an embodiment of the present invention. The above font_segment() may be transmitted as a portion of signaling on service information (SI). For example, the SI may be a Service Description Table (SDT), an Event Information Table (EΓΓ), or a Network Information Table (NIT) of a Digital Video Broadcasting (DBV) system, and may be signaled while being included in each table in the form of a descriptor (subtitling_descriptor). The above font_segment() may be transmitted while being included in a Program Map Table (PMT) of Program-specific information (PSI). subtitling_descriptor may include at least one of descriptor tag information (descriptor_tag), descriptor length information (descriptor_length), subtitle font information(subtitling_type), a font information flag (font_info flag), an essential font indicator (font essential_indicator), or a font segment (font_segment()). The subtitling_type field may distinguish that a component to which subtitling_descriptor is applied is an XML-based subtitle. An embodiment in which XML can be designated using four bits of MSB and in which a desired aspect ratio is designated using four lower bits may be used. In addition, page_id may match the characteristics of the subtitle and the applied part of the XML body. For example, page_id may be used in order to extract subtitle data constituted by a specific language in the XML body. font_info_flag is a flag for indicating whether font-related information that is associated with a subtitle is included. Here, the font-related information may indicate a path through which the font can be downloaded. font essential_indicator may indicate whether the font must be essentially used in timed text. For example, in the case in which font_essentiat_indicator has a value of 1, this may indicate that the font must be essentially used in timed text. In this case, the receiver may download and use the font data according to the font_segment() may include information about a font family, a mime type, and a font download path, as previously described.

The above font_segment() may be transmitted as a portion of signaling on service information (SI). Here, the SI may be program-specific information (PSI). For example, the SI may be a Service Description Table (SDT), an Event Information Table (EIT), or a Network Information Table (NIT) of a Digital Video Broadcasting (DBV) system, and may be signaled while being included in each table in the form of a descriptor (subtitling_descriptor). The above font_segment() may be transmitted while being included in a Program Map Table (PMT) of the Program-specific information (PSI). font_descriptor may include component tag information (component_tag), an essential font indicator (font_essential_indicator), and a font segment (font_segment()). component_tag is an identifier for identifying a subtitle stream that is associated with the font data, and font_segment() may indicate information about font family, mime type, and font download path, as previously described. The description of font_essential_indicator is the same as the above description. The broadcast receiver according to the present invention may check from the above subtitling_descriptor or font_descriptor whether a specific font has been essentially downloaded, and may download the font through related information in order to display subtitle data.

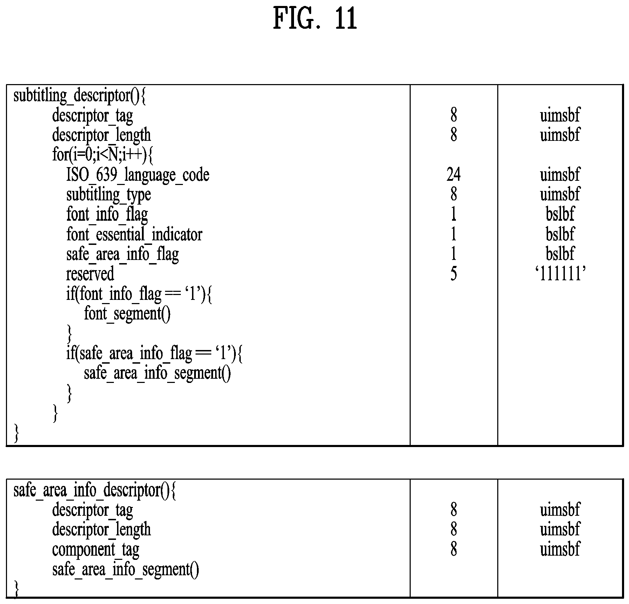

FIG. 11 shows a method of transmitting safe area information as signaling information according to the present invention. The above safe_area_info_segment() may be transmitted as a portion of signaling on service information (SI). For example, the SI may be a Service Description Table (SDT), an Event Information Table (EΓΓ), or a Network Information Table (NIT) of a Digital Video Broadcasting (DBV) system, and may be signaled while being included in each table in the form of a descriptor (subtitling_descriptor). The above safe_area_info_segment() may be transmitted while being included in a Program Map Table (PMT) of Program-specific information (PSI). As shown, subtitling_descriptor may include the above subtitle-related information, and may further include safe area information. The subtitle-related information is identical to what has been described with reference to the previous figure, and only additional information will be described. safe area_info segment() may include a safe area information flag and a safe area information segment. safe_area_info_flag may indicate whether information designating a safe area for displaying subtitle data without being cropped irrespective of the aspect ratio of the receiver is included. safe area_info segment() may include origin information of the root container region and information about the coordinates or size of an area that must be displayed without being cropped, as previously described.

The above safe_area_info_segment() may be transmitted as a portion of signaling on service information (SI). For example, the SI may be a Service Description Table (SDT), an Event Information Table (EΓΓ), or a Network Information Table (NIT) of a Digital Video Broadcasting (DBV) system, and may be signaled while being included in each table in the form of a descriptor (subtitling_descriptor). The above safe_area_info_segment() may be transmitted while being included in a Program Map Table (PMT) of Program-specific information (PSI). safe_area_info_descriptor may include component tag information (component_tag) and a safe area information segment (safe_area_info_segment()). component_tag is an identifier for identifying a subtitle stream that is associated with the safe area information. In addition, the safe area_info segment() may include origin information of the root container region and information about the coordinates or size of an area that must be displayed without being cropped, as previously described.

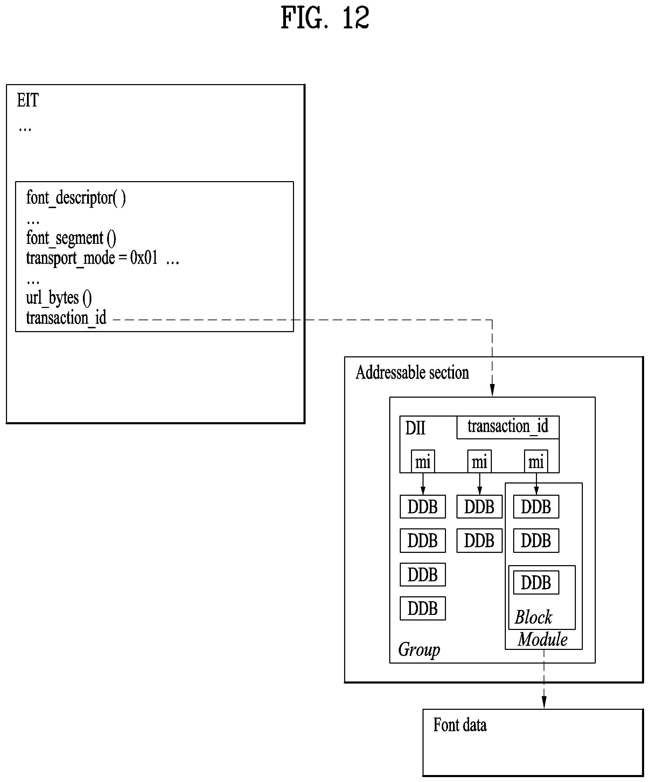

FIG. 12 shows a method of receiving font data using font information received through an EIT according to an embodiment of the present invention. The broadcast reception apparatus according to the present invention may check a transport mode (transport_mode) from a font descriptor included in the received EΓΓ, and may download the font through related information. In the case in which the transport mode (transport_mode) has a value of 0x01, the font is transmitted in the form of a DSMCC data carousel. Transaction_id for uniquely identifying an addressable section in which the font is included may be included in the font descriptor. In addition, URL information may be included. Additionally, an identifier, such as a PID, for the DSMCC data carousel may be included. A description of the detailed operation thereof is identical to the above description.

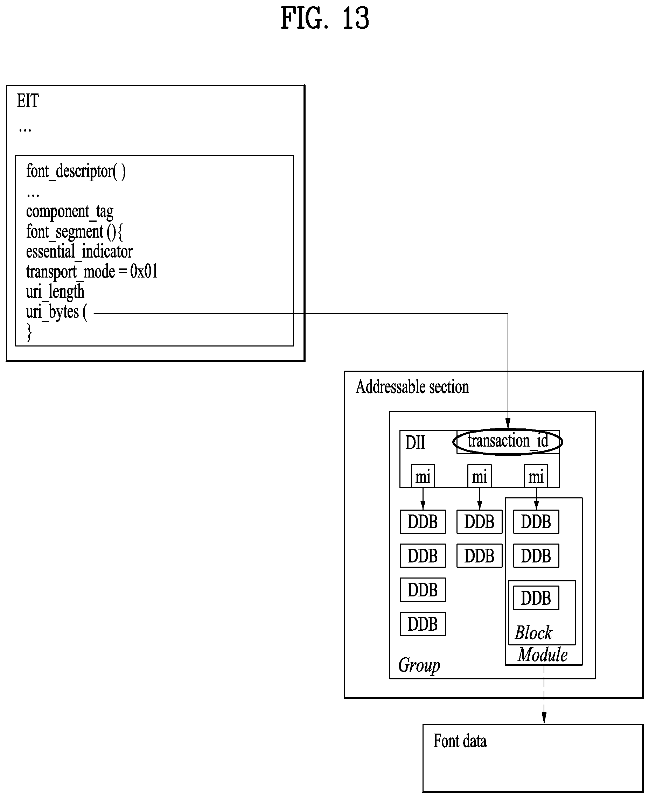

FIG. 13 shows a method of receiving font data using font information received through an EIT according to another embodiment of the present invention. In the figure of the previous embodiment, font_descriptor() may include url_bytes() and transaction_id. In this embodiment, uri_bytes() may include additional information, such as module id, group id, and carousel type id, depending on the form in which a DSMCC data/object carousel is configured. In addition, in some embodiments, uri_bytes() may further include information, such as a language, a font family, and mime type bytes. The receiver may find and receive font data transmitted to the actual DSMCC data/object carousel using uri_bytes().

In the case in which the transport mode information (transport_mode) has a value of 0x01 and carousel information for font download is included in url information (or uri information or urn information), the receiver is operated as follows. The receiver checks font descriptor() and font segment() through the EΓΓ. In the case in which a font is transmitted through a broadcast, the receiver may check through uri_bytes() the path through which a font to be subsequently downloaded is received and the form in which the font is received. The receiver may acquire information capable of identifying a stream including the actual font that is subsequently transmitted through DSM-CC using dvb carousel_id(=transaction_id), carousel_type id, group_id, and module_id included in uri_bytes(). In addition, the receiver may selectively download a font while distinguishing a language, a font family, mime type, etc. through additional information about the font included in path-absolute or uri syntax. The receiver may find a downloaded font that is associated with a stream including a subtitle using transport_stream_id, original_network_id, service_id (event_id may further included), and component_tag included in uri_bytes, may apply the font to the subtitle, and may display the subtitle. That is, transport_stream_id, original network_id, service_id (the event_id may further included), and component_tag included in uri_bytes may associate the downloaded font with the subtitle data, and the receiver may used the downloaded font when the subtitle data are displayed.

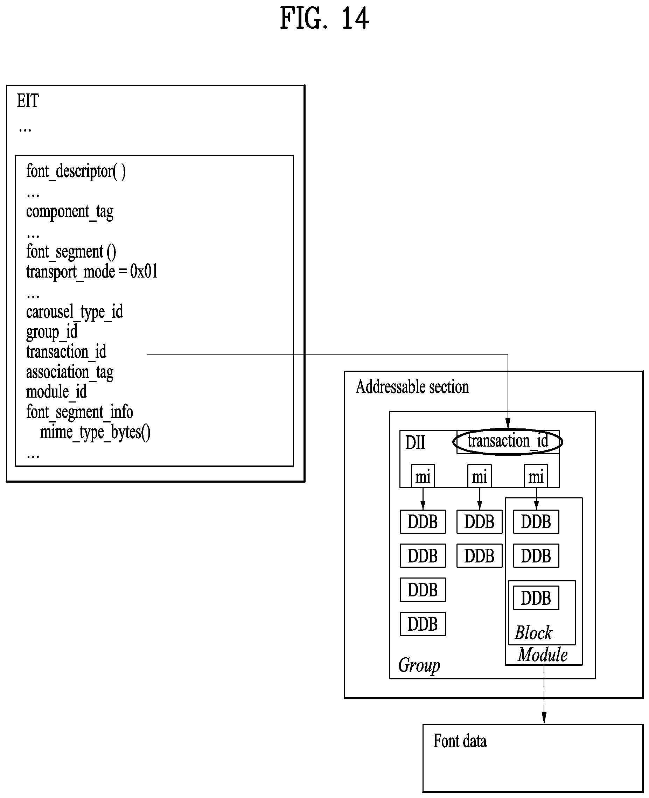

FIG. 14 shows a method of receiving font data using font information received through an EIT according to another embodiment of the present invention. font_descriptor() included in the EIT may be signaled while including a URL according to That is, in the case in which transport_mode has a value of 0x01 and 0x02, font_descriptor() may include information related to font data, for example, URL information from which the font can be downloaded. For example, in the case in which transport_mode has a value of 0x01, the broadcast transmission apparatus may transmit font data through a data carousel within a broadcast network. At this time, font_descriptor() may be further extended in order to include at least one of carousel_type_id, transaction_id, group_id, or module_id. The receiver may be connected to Data Information indication having the same transaction_id value as DSM-CC through the above information in order to receive font data necessary for each module. In the case in which the transport mode has a value of 0x01 (broadcast) in font_descriptor() included in the SDT or EΓΓ, the receiver may know information about the font transmitted through the carousel using carousel_type_id, group_id, transaction_id DII, module_id, mime_type_bytes(), etc. After being downloaded, the font may be distinguished using a name (mime_type_bytes()) in order to determine whether or not the font has been downloaded.

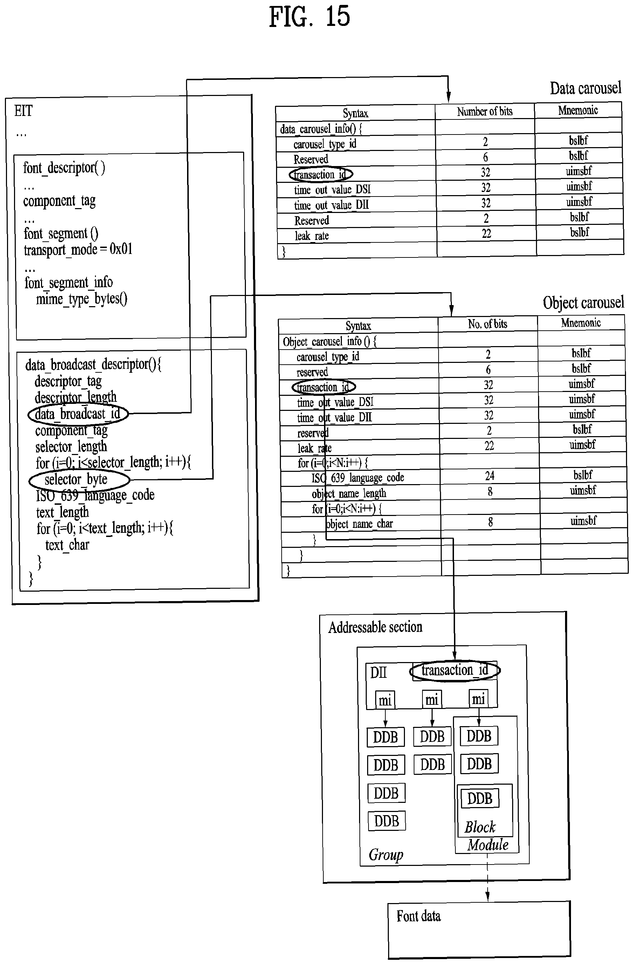

FIG. 15 shows a method of receiving font data using font information received through an EIT according to another embodiment of the present invention. In this embodiment, font_descriptor() included in an EIT does not include url_bytes() or transaction_id, and an existing data_broadcast_descriptor defined for data broadcasting is used. data_broadcast_descriptor included in an SDT/EIT indicates a DII message. This message provides various kinds of information using ModuleInfoByteField of modules provided in a data carousel. For example, information about pointers to the position of DownloadDataBlock messages may be provided. data_broadcast_descriptor may include the following information. data_broadcast_id may be set to a value of 0x0006 indicating a DVB data carousel. component_tag may be set to the same value as a component_tag field of stream_identifier_descriptor for a stream used to broadcast a data carousel. (This field shall have the same value as a component_tag field of a stream_identifier_descriptor (if present in the PSI program map section) for the stream that is used to broadcast the data carousel.) selector_length may be set to 0x10. (This field shall be set to 0x10.) In addition, selector_byte may provide the structure of data_carousel_info. DSI/DII of DSM-CC may be found using transaction_id included therein in order to download a font. As shown, the selector_byte may include data carousel_info for a data carousel and object_carousel_info for an object carousel. Each of them may include transaction_id. The receiver may be connected to Data Information indication having the same transaction_id value as DSM-CC through the above information in order to receive font data necessary for each module.

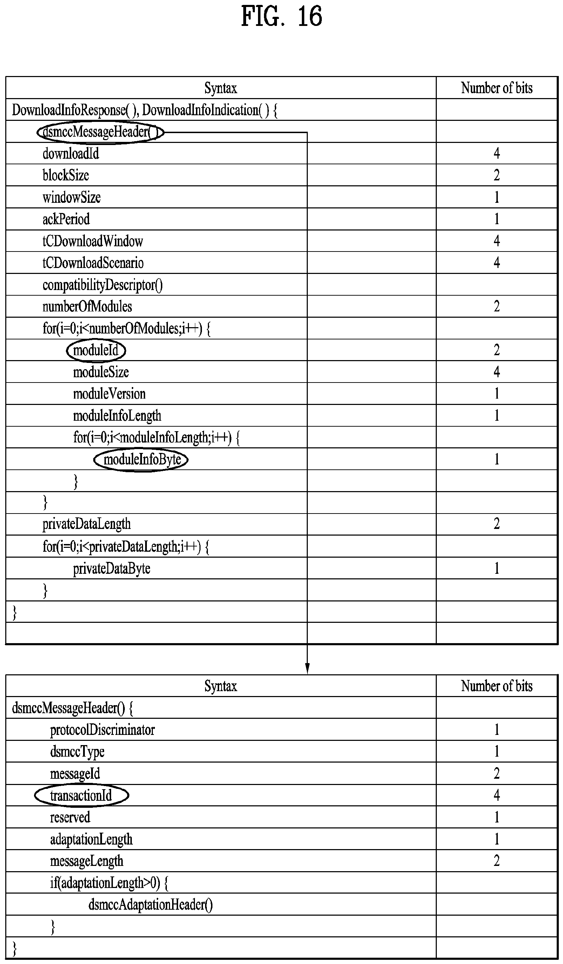

FIG. 16 is a view showing data information indication according to an embodiment of the present invention. In existing DSM-CC, one Data Information indication (DII) is a set of several modules, and one module is a set of several blocks (DDB). That is, a module may mean one font. That is, °sansSerif" may be constituted by one module. At this time, blocks may be divided into large alphabetic characters (block 1) and small alphabetic characters (block 2) of "sansSerif", numbers (block 3), and special characters (block 4). Alternatively, a letter may be provided for each DDB (e.g. "a"). Depending on the circumstances, one block may be configured while the sequence and size thereof are distinguished. A super group may include a font for each of a plurality of languages. In this case, mime_type_byte() of font segment_info(), which was defined previously, may be included in moduleInfoByte in order to identify the font that the module is for.

According to another embodiment, font data °sansSerif" to be downloaded may be configured as one DII. In this case, modules may be divided into large alphabetic characters (module 1) and small alphabetic characters (module 2) of "sansSerif", numbers (module 3), and special characters (module 4). Depending on the circumstances, one module may be configured while the sequence and size thereof are distinguished. At this time, a letter may be provided for each block (e.g. "a").

According to another embodiment, a module may include an entire font, and another module may include family fonts of "sansSerif". "SansSerif" (module 1), "serif" (module 2), "monospaceSansSerif" (module 3), and °monospaceSerif" (module 4) may be included in respective modules.

According to another embodiment, a DII may be constituted by one font, and a font of another language may be included in a DSI. In this case, DownloadServerInitiate (DSI) is included, whereby group_id is further included.

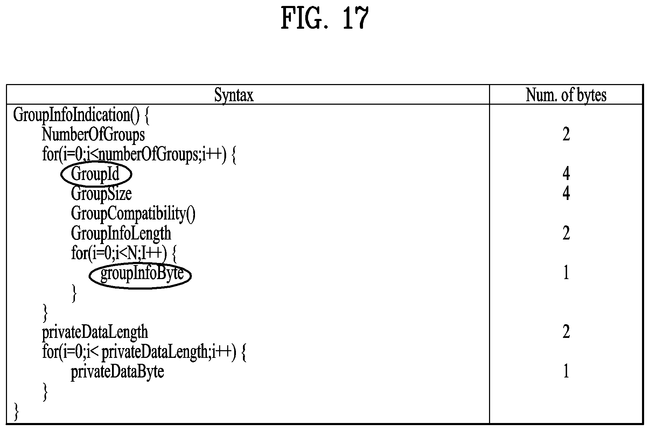

FIG. 17 is a view showing group information indication (groupInfoIndication) according to an embodiment of the present invention. The shown groupInfoIndication may be included in privateDataByte of above Down loadServerIn itiate. A DownloadServerInitiate message may be used to build a super group (SuperGroup). (A DownloadServerInitiate message is used to build a SuperGroup.) Here, the DownloadServerInitiate for DVB data carousels may include the following information. ServerId may be set to 20 bytes with a value of 0xFF. (This field shall be set to 20 bytes with a value of 0xFF.) CompatibilityDescriptor() may include only a compatibilityDescriptorLength field of compatibilityDescriptor(), as defined in DSM-CC. (This structure shall only contain the compatibilityDescriptorLength field of the compatibilityDescriptor() as defined in DSM-CC.) This may be set to 0x0000. It shall be set to the value of 0x0000. private Data Length may define the length, in bytes, of the following GroupInfoIndication. (privateDataLength: this field defines the length in bytes of the following GroupInfoIndication structure.)

A privateDataByte field may include the shown GroupInfoIndication(). (The privateDataByte fields shall contain the GroupInfoIndication structure as defined in the figure.) DownloadServerInitiate(DSI) may include language information in groupInfoIndication.

groupInfoIndication may include at least one of number-of-groups information (NumberOfGroups), a group identifier (GroupId), group size information (GroupSize), group compatibility information (GroupCompati-bility), group information length information (GroupInfoLength), group information bytes (groupInfoByte), private data length information (PrivateDataLength), or private data bytes (PrivateDataByte). NumberOfGroups may indicate the number of groups, and GroupId may indicate an identifier of each group. GroupSize may indicate the size of a group, and GroupInfoLength may indicate the length of the following groupInfoByte. groupInfoByte may include an identifier that is capable of indicating the corresponding language, like the language defined in the above font_segment_for_DSMCC(). groupInfoByte may identify which language the group is for.

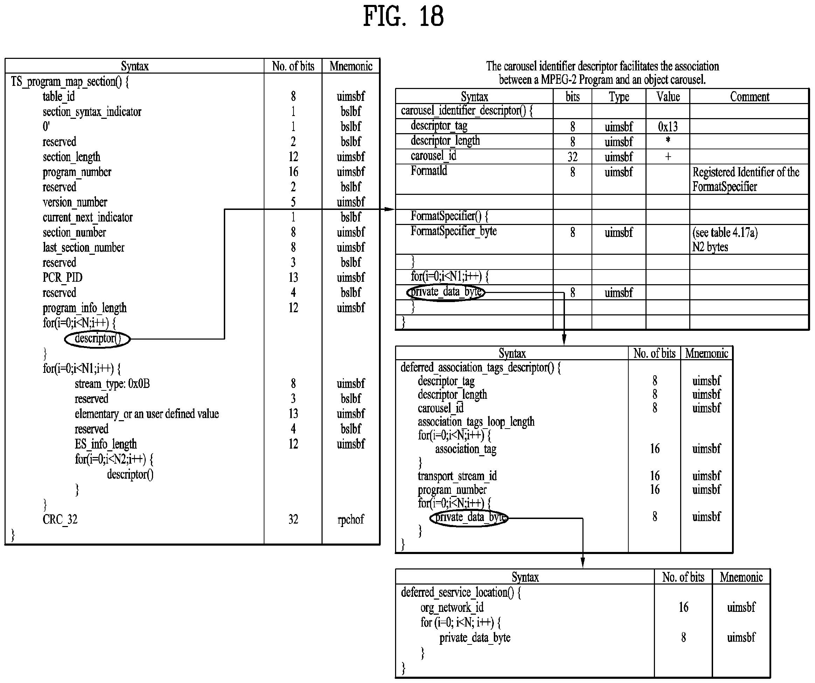

FIG. 18 is a view showing a font download method using a PMT of a broadcast receiver according to an embodiment of the present invention. In particular, this figure shows the case in which transport_mode has a value of 0x01. As previously described, the receiver may check font descriptor() and font segment() through an EΓΓ. In the case in which a font is transmitted through a broadcast, it is possible to acquire, through font_segment_for_DSMCC() and data_broadcast_descriptor(), information about the path through which a font to be subsequently downloaded is received and the form in which the font is received. The receiver may acquire information for identifying a stream including the actual font that is subsequently transmitted through DSM-CC using carousel_id, transport_stream_id, original_network_id, and service_id included in font_segment_for_DSMCC(). In addition, the receiver may identify a font to be downloaded through transaction_id, which is indication information (an addressable section that is uniquely identified) of DSI including a plurality of languages or DII that is capable of downloading a plurality of fonts based on the language according to carousel_type_id, and may download the font. When the event is actually broadcasted, the receiver may check carousel_id through carousel_identifier_descriptor included in a PMT 1st descriptor loop using a PMT. In addition, the receiver may recognize another PMT including a specific subtitle using association_tag, transport stream_id, and original_network_id included in deferred_association_tags_descriptor(), and may check information of a stream including a subtitle. The receiver may find a downloaded font connected to the stream including the subtitle, may apply the font to the subtitle, and may display the subtitle.

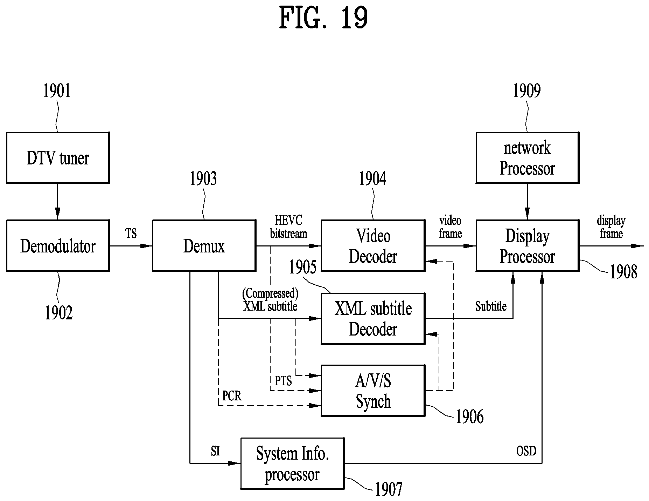

FIG. 19 is a view showing the detailed configuration of a broadcast receiver according to an embodiment of the present invention. The broadcast receiver may include at least one of a DTV tuner 1901, a demodulator 1902, a demultiplexer (demux) 1903, a video decoder 1904, an XML subtitle decoder 1905, an audio/video/subtitle synchronizer (A/V/S sync) 1906, a system information processor (SI processor) 1907, and/or a display processor 1908. In some embodiments, the broadcast receiver may further include a network processor 1909.

The DTV tuner 1901 may receive a broadcast signal transmitted by the transmitter. The received broadcast signal may be input to the demodulator 1902. The received broadcast signal may include media data and subtitle data related thereto.

The demodulator 1902 may demodulate the broadcast signal and output a transport stream (TS). The TS may be input to the demultiplexer 1903, by which the TS may be demultiplexed. The demultiplexed TS may include media data (e.g. HEVC bitstream), an XML subtitle stream, and SI (service information). Here, the XML subtitle may be packetized or compressed. As previously described, the XML subtitle or the SI may include information about a font related to the subtitle data.

The video decoder 1904 may decode the media data (e.g. HEVC bitstream) input thereto in order to output a video frame.

The XML subtitle decoder 1905 may extract a subtitle from the XML subtitle stream input thereto in order to decode the subtitle. As previously described with reference to FIGs. 4 to 18, a PES packet of the XML subtitle stream may include at least one of information about the font related to the subtitle data, information about the safe area, or information indicating that the font is an essential download font.

The audio/video/subtitle synchronizer (A/V/S sync) 1906 may receive a PTS and Program Clock Reference (PCR) of each of the media data (HEVC bitstream) and the XML subtitle in order to synchronize the video frame and the subtitle.

The system information processor 1907 may receive the service information (SI) output from the demultiplexer, and may extract OSD information therefrom. As previously described with reference to FIGs. 4 to 18, the SI information may include at least one of information about the font related to the subtitle data, information about the safe area, or information indicating that the font is an essential download font.

The network processor 1909 may receive font data related to the subtitle data using transaction_Id or URL information in the above subtitle-related font information. Particularly, in the case in which the information indicating that the font is an essential download font is set to "essential", the network processor may download the font data.

The display processor 1908 may receive the video frame and the subtitle, and may output a display frame. The display processor 1908 may further receive On Screen Display (OSD) information, in addition to the video frame and the subtitle, and may output a display frame. Here, the OSD information may indicate information about the font related to the subtitle data, information about the safe area, or information indicating that the font is an essential download font. The output display frame may be displayed through an image output device, and the XML subtitle and the video frame, described in the present invention, may also be displayed.

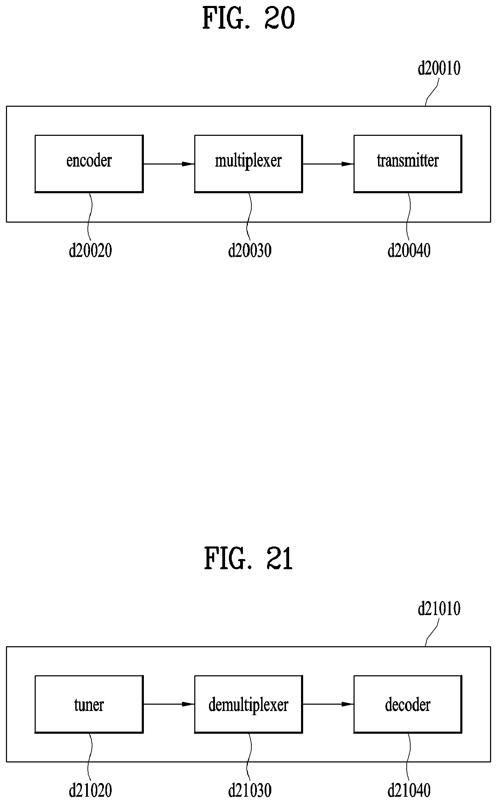

FIG. 20 is a block diagram showing a broadcast transmitter according to an embodiment of the present invention. The broadcast transmitter d20010 according to the present invention may include an encoder d20020, a multiplexer d20030, and/or a transmitter d20040.

The encoder d20020 may encode video data having a resolution of UHD, HD, or SD input thereto in order to generate a video stream. Here, the video stream may be encoded by High Efficiency Video Coding (HEVC). The video stream may mean a video elementary stream (ES) or a video packetized elementary stream (PES). According to the embodiment of the prevent invention, the encoder may encode subtitle data into a subtitle stream, and PES packets constituting the subtitle stream may further include at least one of font information associated with the subtitle data, essential download subtitle information, or safe area information.

The encoded video stream may be input to the multiplexer d20030 together with the XML subtitle stream. The multiplexer d20030 may multiplex the encoded SI information, video stream, and subtitle stream in order to generate a transport stream (TS). Here, the subtitle stream may be an XML subtitle stream. In some embodiments, at least one of the font information associated with the subtitle data, the essential download font information, or the safe area information may be transmitted while being multiplexed together with the video stream and the subtitle stream in the SI information.

The transmitter d20040 may transmit the transport stream output from the multiplexer d20030 as a broadcast signal. Here, the transport stream may be channel-coded and modulated before being transmitted as the broadcast signal.

FIG. 21 is a block diagram showing a broadcast receiver according to an embodiment of the present invention. The broadcast receiver d21010 according to the present invention may include a tuner d21020, a demultiplexer d21030, and/or a decoder d21040.

A broadcast signal received by the tuner d21020 may be demodulated and then channel-decoded. The channel-decoded broadcast signal may be input to the demultiplexer d21030, by which the broadcast signal may be demultiplexed into a video stream, a subtitle stream, and SI. The subtitle stream or the SI may include at least one of font information associated with subtitle data, essential download font information, or safe area information.

The output of the demultiplexer may be input to the decoder d21040, by which the output may be decoded into video data and subtitle data. That is, the video stream may be decoded by a video decoder so as to be output as video data, and the subtitle stream may be decoded by a subtitle decoder so as to be output as subtitle data. The video data and the subtitle data may be synchronized so as to be displayed by the receiver. The broadcast receiver may acquire font information associated with the subtitle data, essential download font information, and safe area information from the subtitle stream or the SI. The broadcast receiver may receive font data related to the subtitle data using the above information, may use the font data, and may display the subtitle data in consideration of the safe area information.

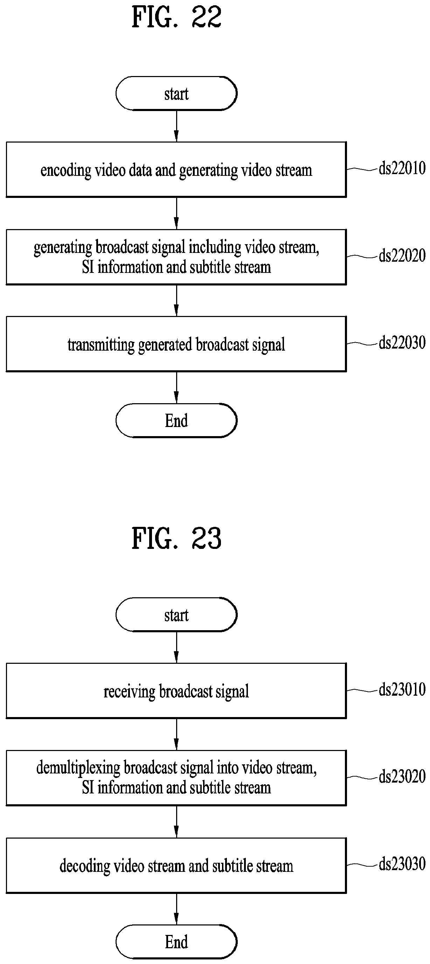

FIG. 22 is a view showing a method of transmitting a broadcast signal including an XML subtitle according to an embodiment of the present invention. The method of transmitting the broadcast signal including the XML subtitle may include encoding video to generate a video stream (ds22010), generating a broadcast signal including the generated video stream and subtitle information (ds22020), and transmitting the generated broadcast signal (ds22030).

At the step of encoding video to generate a video stream (ds22010), video data having a resolution of UHD, HD, or SD may be input, and the video data may be encoded to generate a video stream. Here, the video stream may be encoded by High Efficiency Video Coding (HEVC). The video stream may be a video elementary stream (ES) or a video packetized elementary stream (PES). In addition, an XML subtitle stream may be generated. The subtitle stream may include at least one of font information associated with the subtitle data, essential download font information, or safe area information.

At the step of generating a broadcast signal including the generated video stream, SI information, and subtitle stream (ds22020), the encoded video stream and the subtitle stream may be multiplexed to generate a transport stream (TS). Here, the subtitle stream may be an XML subtitle stream. A PED packet included in the TS may include subtitle data and subtitle-related information, and, for example, may include at least one of font information associated with the subtitle data, essential download font information, or safe area information.

At the step of transmitting the generated broadcast signal (ds22030), the transport stream may be transmitted as a broadcast signal. Here, the transport stream may be channel-coded and modulated before being transmitted as the broadcast signal.

FIG. 23 is a view showing a method of receiving a broadcast signal including an XML subtitle according to an embodiment of the present invention. The method of receiving the broadcast signal including the XML subtitle may include receiving a broadcast signal (ds23010), demultiplexing the received broadcast signal into SI information, a video stream, and a subtitle stream (ds23020), and decoding the video stream (ds23030).

At the step of receiving a broadcast signal (ds23010), a broadcast signal received using the tuner may be demodulated and then channel-decoded. At the step of demultiplexing the received broadcast signal into SI information, a video stream, and a subtitle stream (ds23020), the channel-decoded broadcast signal may be demultiplexed into a video stream and a subtitle stream using the demultiplexer. The SI information or the subtitle stream may include at least one of font information associated with subtitle data, safe area information, or information indicating that the font is an essential download font.

At the step of decoding the video stream and the subtitle stream (ds23030), the video stream may be decoded using the video decoder in order to acquire video data. At this step, the subtitle stream may be decoded using the subtitle decoder in order to acquire subtitle data. The video data and the subtitle data may be synchronized so as to be displayed by the receiver. The receiver may further receive font data using font information associated with the subtitle data and information indicating that the font is an essential download font. The receiver may display the subtitle data using the font data and the safe area information.

According to an embodiment of the present invention, it is possible to acquire font-related information that is associated with a subtitle stream.

According to an embodiment of the present invention, it is possible to receive the font-related information from a data carousel using the font-related information.

According to an embodiment of the present invention, it is possible to signal whether font data associated with the subtitle stream is to be essentially downloaded.

According to an embodiment of the present invention, it is possible to signal a safe area for displaying subtitle data without being cropped in a display area.

While the present invention has been described with reference to separate drawings for the convenience of description, new embodiments may be implemented by combining embodiments illustrated in the respective drawings. As needed by those skilled in the art, designing a computer-readable recording medium, in which a program for implementing the above-described embodiments is recorded, falls within the scope of the present invention.

The apparatus and method according to the present invention is not limitedly applied to the constructions and methods of the embodiments as previously described; rather, all or some of the embodiments may be selectively combined to achieve various modifications.

Meanwhile, the image-processing method according to the present specification may be implemented as code that can be written on a processor-readable recording medium and thus read by a processor provided in a network device. The processor-readable recording medium may be any type of recording device in which data is stored in a processor-readable manner. The processor-readable recording medium may include, for example, read only memory (ROM), random access memory (RAM), compact disc read only memory (CD-ROM), magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

It will be apparent that, although the preferred embodiments have been shown and described above, the present specification is not limited to the above-described specific embodiments, and various modifications and variations can be made by those skilled in the art to which the present invention pertains without departing from the gist of the appended claims. Thus, it is intended that the modifications and variations should not be understood independently of the technical spirit or prospect of the present specification.

In addition, the present specification describes both a product invention and a method invention, and descriptions of the two inventions may be complementarily applied as needed.

### [Mode for Invention]

Various embodiments have been described in the best mode for carrying out the invention.

### [Industrial Applicability]

The present invention has industrial applicability in that the present invention can be repeatedly used in broadcast and video signal processing fields.

Advantageous aspects of the present disclosure bay be summarized as follows:
[Aspect 1] A broadcast signal transmission method comprising:
   encoding video data to generate a video stream;
   generating a broadcast signal comprising the generated video stream and a subtitle stream, the broadcast signal further comprising information enabling downloading of font data associated with subtitle data contained in the subtitle stream and an indicator indicating whether the font data are essential; and
   transmitting the generated broadcast signal.
[Aspect 2] The broadcast signal transmission method according to aspect 1, wherein the information enabling downloading of the font data and the indicator indicating whether the font data are essential are transmitted in a state of being contained in program-specific information (PSI) or service information.
[Aspect 3] The broadcast signal transmission method according to aspect 2, wherein the information enabling downloading of the font data is uniform/universal resource identifier (URI) information comprising a transaction identifier (transaction ID).
[Aspect 4] The broadcast signal transmission method according to aspect 1, wherein the subtitle stream further comprises information about a safe area for preventing the subtitle data from being cropped according to an aspect ratio of a receiver when the subtitle data are displayed.
[Asepct 5] A broadcast signal transmission apparatus comprising:
   an encoder for encoding video data to generate a video stream;
   a multiplexer for generating a broadcast signal comprising the generated video stream and a subtitle stream, the broadcast signal further comprising information enabling downloading of font data associated with subtitle data contained in the subtitle stream and an indicator indicating whether the font data are essential; and
   a transmitter for transmitting the generated broadcast signal.
[Aspect 6] The broadcast signal transmission apparatus according to aspect 5, wherein the information enabling downloading of the font data and the indicator indicating whether the font data are essential are transmitted in a state of being contained in program-specific information (PSI) or service information
[Aspect 7] The broadcast signal transmission apparatus according to aspect 6, wherein the information enabling downloading of the font data is uniform/universal resource identifier (URI) information comprising a transaction identifier (transaction ID).
[Aspect 8] The broadcast signal transmission apparatus according to aspect 5, wherein the subtitle stream further comprises information about a safe area for preventing the subtitle data from being cropped according to an aspect ratio of a receiver when the subtitle data are displayed.
[Aspect 9] A broadcast signal reception method comprising:
   receiving a broadcast signal, the broadcast signal comprising a video stream and a subtitle stream, the broadcast signal further comprising information enabling downloading of font data associated with subtitle data contained in the subtitle stream and an indicator indicating whether the font data are essential;
   demultiplexing the received broadcast signal into the video stream and the subtitle stream;
   decoding the video stream and the subtitle stream;
   downloading the font data based on the information enabling downloading of the font data; and
   displaying the subtitle stream using the font data.
[Aspect 10] The broadcast signal reception method according to aspect 9, wherein the information enabling downloading of the font data and the indicator indicating whether the font data are essential are received in a state of being contained in program-specific information (PSI) or service information.
[Aspect 11] The broadcast signal reception method according to aspect 10, wherein the information enabling downloading of the font data is uniform/universal resource identifier (URI) information comprising a transaction identifier (transaction ID).
[Aspect 12] The broadcast signal reception method according to aspect 9, wherein the subtitle stream further comprises information about a safe area for preventing the subtitle data from being cropped according to an aspect ratio of a receiver when the subtitle data are displayed.
[Aspect 13] A broadcast signal reception apparatus comprising:
   a tuner for receiving a broadcast signal, the broadcast signal comprising a video stream and a subtitle stream, the broadcast signal further comprising information enabling downloading of font data associated with subtitle data contained in the subtitle stream and an indicator indicating whether the font data are essential;
   a demultiplexer for demultiplexing the received broadcast signal into the video stream and the subtitle stream;
   a decoder for decoding the video stream and the subtitle stream;
   a network processor for downloading the font data based on the information enabling downloading of the font data; and
   a display processor for displaying the subtitle stream using the font data.
[Aspect 14] The broadcast signal reception apparatus according to aspect 13, wherein the information enabling downloading of the font data and the indicator indicating whether the font data are essential are received in a state of being contained in program-specific information (PSI) or service information.
[Aspect 15] The broadcast signal reception apparatus according to asepct 14, wherein the information enabling downloading of the font data is uniform/universal resource identifier (URI) information comprising a transaction identifier (transaction ID).

## Claims

1. A method for transmitting a broadcast signal, the method comprising:
generating subtitle stream packets including subtitle data;
generating the broadcast signal including the subtitle stream packets, information for a font related to the subtitle data, and video stream packets carrying a video stream,
**characterized in that** the font is downloadable from an internet,
wherein the information for the font includes stream identification information and service identification information related to the font,
wherein Uniform Resource Identifier, URI, information for acquiring the font is formed based on at least the stream identification information, the service identification information, language information, and font family information; and
transmitting the broadcast signal.

2. The method according to claim 1,
wherein the information for the font further includes a font element describing the font,
wherein the font element includes transport mode information for indicating that the font is downloadable from the internet,
wherein the font element further includes URI length information and the URI information,
wherein the URI length information specifies a length of the URI information, and
wherein the URI information specifies an URI referring to a location of the font.

3. The method according to claim 1 or 2,
wherein the broadcast signal further includes a safe area element providing information indicating an area which is used to avoid the subtitle to be cropped.

4. An apparatus of transmitting a broadcast signal, the apparatus comprising:
a first processor (d20020) configured to generate subtitle stream packets including subtitle data;
a second processor configured to generate the broadcast signal including the subtitle stream packets, information for a font related to the subtitle data, and video stream packets carrying a video stream,
**characterized in that** the font is downloadable from an internet,
wherein the information for the font includes stream identification information and service identification information related to the font,
wherein Uniform Resource Identifier, URI, information for acquiring the font is formed based on at least the stream identification information, the service identification information, language information, and font family information; and
a transmitter (d20040) configured to transmit the broadcast signal.

5. The apparatus according to claim 4,
wherein the information for the font further includes a font element describing the font,
wherein the font element includes transport mode information for indicating that the font is downloadable from the internet,
wherein the font element further includes URI length information and the URI information,
wherein the URI length information specifies a length of the URI information, and
wherein the URI information specifies an URI referring to a location of the font.

6. The apparatus according to claim 4 or 5,
wherein the broadcast signal further includes a safe area element providing information indicating an area which is used to avoid the subtitle to be cropped.

7. A method for receiving a broadcast signal, the method comprising:
receiving the broadcast signal including subtitle stream packets that include subtitle data, the broadcast signal further including information for a font related to the subtitle data and video stream packets carrying a video stream,
**characterized in that** the font is downloadable from an internet,
wherein the information for the font includes stream identification information and service identification information related to the font,
wherein Uniform Resource Identifier, URI, information for acquiring the font is formed based on at least the stream identification information, the service identification information, language information, and font family information;
downloading the font from the internet;
demultiplexing the subtitle stream packets and the video stream packets in the broadcast signal;
decoding the subtitle data in the subtitle stream packets; and
decoding the video stream.

8. The method according to claim 7,
wherein the information for the font further includes a font element describing the font,
wherein the font element includes transport mode information for indicating that the font is downloadable from the internet,
wherein the font element further includes URI length information and the URI information,
wherein the URI length information specifies a length of the URI information, and
wherein the URI information specifies an URI referring to a location of the font.

9. An apparatus of receiving a broadcast signal, the apparatus comprising:
a tuner (1901) configured to receive the broadcast signal including subtitle stream packets that include subtitle data, the broadcast signal further including information for a font related to the subtitle data and video stream packets carrying a video stream,
**characterized in that** the font is downloadable from an internet,
wherein the information for the font includes stream identification information and service identification information related to the font,
wherein Uniform Resource Identifier, URI, information for acquiring the font is formed based on at least the stream identification information, the service identification information, language information, and font family information;
a network processor (1909) configured to download the font from the internet;
a demultiplxer (1903) configured to demultiplex the subtitle stream packets and the video stream packets in the broadcast signal;
a first decoder (1905) configured to decode the subtitle data in the subtitle stream packets; and
a second decoder (1904) configured to decode the video stream.

10. The apparatus according to claim 9,
wherein the information for the font further includes a font element describing the font,
wherein the font element includes transport mode information for indicating that the font is downloadable from the internet,
wherein the font element further includes URI length information and the URI information,
wherein the URI length information specifies a length of the URI information, and
wherein the URI information specifies an URI referring to a location of the font.
